# EUROPÄISCHE PATENTANMELDUNG

(11) **EP 0 955 494 A2**
(43) Veröffentlichungstag der Anmeldung: **10.11.1999**
(21) Anmeldenummer: 99108040.9
(22) Anmeldetag: 23.04.1999
(51) Int. Cl.: F16L 25/00

(54) **System zur Verbindung von Rohrleitungen**

(30) Priorität: 07.05.1998 DE 19820501
(71) Anmelder: Stefan Nau Gmbh & Co. Behältertechnik, 72135 Dettenhausen (DE)
(72) Erfinder: Kaiser, Uwe, 72820 Sonnenbühl (DE); Wörz, Stefan Dipl.-Ing., 71088 Holzgerlingen (DE)
(74) Vertreter: Patentanwälte Bartels und Partner

(57) **Zusammenfassung**

Ein System zur Verbindung von Leitungs- und/oder Armaturenteilen bei Heizungs- oder Sanitäranlagen mittels eine fluiddichte Steckverbindung ermöglichenden Verbindungselementen (1 und 51), von denen die einen mit einem Steckerteil (3) und die anderen mit zumindest einer hierzu komplementären Steckeraufnahme (53) versehen sind, ist dadurch gekennzeichnet, daß die den Steckerteil (3) aufweisenden Verbindungselemente als Adapter (1) ausgebildet sind, die eine Verbindung zwischen Leitungsabschnitten unterschiedlicher Querschnittsgrößen ermöglichen.

## Beschreibung

Die Erfindung bezieht sich auf ein System zur Verbindung von Leitungs- und/oder Armaturenteilen bei Heizungs- oder Sanitäranlagen mittels eine fluiddichte Steckverbindung ermöglichenden Verbindungselementen, von denen die einen mit einem Steckerteil und die anderen mit zumindest einer hierzu komplementären Steckeraufnahme versehen sind.

Beim Bau von Heizungs- und Sanitäranlagen stellt der für die Montage der betroffenen Anlage erforderliche Aufwand bekanntlich einen beträchtlichen Kostenfaktor dar. Das allgemeine Bestreben geht daher dahin, durch Vereinfachungen der Montage diesbezügliche Kosteneinsparungen zu erzielen.

Die Verwendung von eine fluiddichte Steckverbindung ermöglichenden Verbindungselementen, wie sie beispielsweise aus der DE 196 14 684 A1 bekannt sind, führt zu kürzeren Montagezeiten, was zur Kostenverringerung beiträgt. Aufgabe der Erfindung ist es, ein Verbindungssystem zu schaffen, das, über die durch die Verwendung von Steckverbindungen erzielbaren Vorteile hinausgehend, eine noch weitergehende Vereinfachung des Anlagenbaus und damit eine noch wesentlich höhere Kosteneinsparung ermöglicht.

Bei einem System der eingangs genannten Art ist diese Aufgabe erfindungsgemäß dadurch gelöst, daß die den Steckerteil aufweisenden Verbindungselemente als eine Verbindung zwischen Leitungsabschnitten unterschiedlicher Querschnittsgröße ermöglichende Adapter ausgebildet sind, bei denen der Steckerteil an der Eingangsseite des Adapters einen Durchgang bildet, dessen Querschnitt an den größten in der betreffenden Anlage vorkommenden Leitungsquerschnitt angepaßt ist, und die Ausgangsseite des Adapters eine an eine etwa gleiche oder kleinere Querschnittsgröße angepaßte Anschlußeinrichtung bildet.

Die erfindungsgemäße Ausbildung der steckerseitigen Verbindungselemente als Adapter zur Größenanpassung ermöglicht eine überraschend weitgehende Vereinfachung des gesamten Systems hinsichtlich der Anzahl der Systemkomponenten, welche für den Aufbau einer betreffenden Anlage bereitgehalten und zur Anlieferung an die Baustelle zusammengestellt werden müssen. Zieht man beispielsweise den Aufbau einer Heizungsanlage bei einem mehrgeschossigen Gebäude in Betracht, wo entsprechend der unterschiedlichen Abstände der Armaturen und Armaturenteile von der Kesselanlage unterschiedliche Rohrleitungsquerschnitte und Anschlußgrößen zu berücksichtigen sind, so ist es bislang erforderlich, sämtliche Arten der benötigten Anschlußelemente in sämtlichen benötigten Anschlußgrößen bereitzustellen, also etwa Kupplungsstücke für beispielsweise zumindest drei Anschlußgrößen, Winkelstücke und T-Stücke, ebenfalls jeweils für drei oder mehr Anschlußgrößen.

Das erfindungsgemäße System stellt demgegenüber ein Baukastensystem dar, bei dem lediglich die steckerseitigen Verbindungselemente im System in mehreren Ausführungen enthalten sind und in ihrer Eigenschaft als Adapter die Verbindung mit den unterschiedlichen, jeweils vorkommenden Armaturen oder Armaturenteilen unterschiedlicher Anschlußgrößen oder unterschiedlicher Anschlußarten ermöglichen. Diese mit den zu den Steckerteilen komplementären Steckeraufnahmen versehenen Verbindungselemente können dann sämtliche in standardisierter Größe verwenden werden. Somit sind Kupplungsstücke, Winkelstücke und T-Stücke nur jeweils einer Baugröße erforderlich.

Eine besonders weitgehende Vereinfachung ergibt sich, wenn die Verbindungselemente aus einem sowohl für Heizungs- als auch für Sanitäranlagen geeigneten Werkstoff, beispielsweise aus einer Rotguß-Legierung, gefertigt sind. Dadurch ist die durch das erfindungsgemäße "Baukastensystem" erzielte Vereinfachung gleichzeitig für den gesamten, Rohrleitungssysteme enthaltenden Anlagenbau nutzbar.

Für das die Heizungsanlage betreffende System kann das den Steckerteil aufweisende Verbindungselement als Preßadapter mit als abgangsseitige Anschlußeinrichtung dienendem Preßverbinderelement ausgebildet sein. Der Adapter ermöglicht hierbei einen besonders einfachen Anschluß einer schmiegsamen Leitung, vorzugsweise in Form eines Kunststoffrohres oder Metallrohres, wobei das betreffende Rohr mittels einer aufgeschobenen, metallischen Preßhülse verpreßbar ist. Diese kann eine Ausnehmung als Sichtfenster zur Kontrolle aufweisen, ob das Rohr bündig gesteckt ist.

Bei den für den Sanitärbereich vorgesehenen Verbindungselementen können die den Steckerteil aufweisenden Verbindungselemente als Gewindeadapter mit als abgangsseitiger Anschlußeinrichtung vorgesehenem Außengewinde oder Innengewinde ausgebildet sein. Auch die eine Steckeraufnahme bildenden Verbindungselemente können eine abgangsseitige Anschlußeinrichtung mit Innengewinde oder Außengewinde aufweisen. Zudem können diese Anschlußelemente mit Befestigungsflügeln oder Aufhängeösen versehen sein, die die einfache Wandbefestigung ermöglichen.

Vorzugsweise beinhaltet die Steckverbindung zwischen Steckerteil und Steckeraufnahme für eine formschlüssige, unlösbare gegenseitige Verrastung der Verbindungselemente einen federnden Sicherungsring, der beim Zusammenstecken von Steckerteil und Steckeraufnahme federelastisch in die an dieser und an jenem ausgebildeten, miteinander fluchtenden Ringnuten einfällt.

Nachstehend ist die Erfindung anhand von in der Zeichnung dargestellten Ausführungsbeispielen im einzelnen erläutert. Es zeigen:
- Fig. 1: eine perspektivische Ansicht eines einen Steckerteil aufweisenden Verbindungselementes in Form eines Preßadapters;
- Fig. 2: einen in größerem Maßstab gezeichneten Längsschnitt des Preßadapters von Fig. 1;
- Fig. 3: eine der Fig. 1 entsprechende perspektivische Ansicht eines Preßadapters, bei dem das abgangsseitige Preßverbinderelement einem gegenüber Fig. 1 kleineren Leitungsquerschnitt entspricht;
- Fig. 4: eine den Fig. 1 und 3 ähnliche perspektivische Ansicht eines einen Steckerteit aufweisenden Verbindungselementes in Form eines Gewindeadapters mit abgangsseitigem Innengewinde;
- Fig. 5: einen in größerem Maßstab gezeichneten Längsschnitt des Gewindeadapters von Fig. 4;
- Fig. 6: einen der Fig. 5 ähnlichen Längsschnitt eines Gewindeadapters mit Außengewinde;
- Fig. 7: eine perspektivische Ansicht eines mit Steckeraufnahmen versehenen Verbindungselementes in Form eines Kupplungsstückes;
- Fig. 8: einen Längsschnitt des Kupplungsstückes von Fig. 7, gezeichnet ohen zugehörige Sicherungsringe;
- Fig. 9: einen gegenüber Fig. 8 in größerem Maßstab gezeichneten Längsschnitt des Kupplungsstückes mit einseitig zur Bildung einer fluiddichten Steckverbindung eingestecktem Preßadapter von Fig. 2;
- Fig. 10: eine perspektivische Ansicht eines mit Steckeraufnahmen versehenen Verbindungselementes in Form eines Winkelstückes;
- Fig. 11: eine Vorderansicht des Winkelstückes von Fig. 10;
- Fig. 12: einen Schnitt entsprechend der Schnittlinie 12-12 von Fig. 11, gezeichnet ohne zugehörige Sicherungsringe;
- Fig. 13: einen der Fig. 12 ähnlichen Schnitt eines Winkelstückes mit Lötanschluß;
- Fig. 14: eine Seitenansicht des Winkelstückes von Fig. 13 mit am Lötanschluß eingetötetem Kupferrohr;
- Fig. 15: eine perspektivische Ansicht eines mit Steckeraufnahmen versehenen Verbindungselementes in Form eines T-Stückes;
- Fig. 16: eine Vorderansicht des T-Stückes von Fig. 15;
- Fig. 17: einen Schnitt entsprechend der Schnittlinie 17-17 von Fig. 16, gezeichnet ohne zugehörige Sicherungsringe;
- Fig. 18: einen der Fig. 17 ähnlichen Schnitt eines T-Stückes mit mittigem Lötanschluß;
- Fig. 19: eine Vorderansicht des T-Stückes von Fig. 18 mit am Lötanschtuß eingelötetem, abgewinkeltem Kupferrohr;
- Fig. 20: einen der Fig. 8 ähnlichen Längsschnitt eines mit Befestigungsflügeln und einem abgangsseitigen Innengewinde versehenen Kupplungsstückes;
- Fig. 21: eine der Fig. 11 ähnliche Vorderansicht eines mit Befestigungsflügeln und abgangsseitigem Innengewinde versehenen Winkelstückes und
- Fig. 22: einen der Fig. 17 ähnlichen Längsschnitt eines mit Befestigungsflügeln und einem abgangsseitigen Innengewinde versehenen T-Stückes.

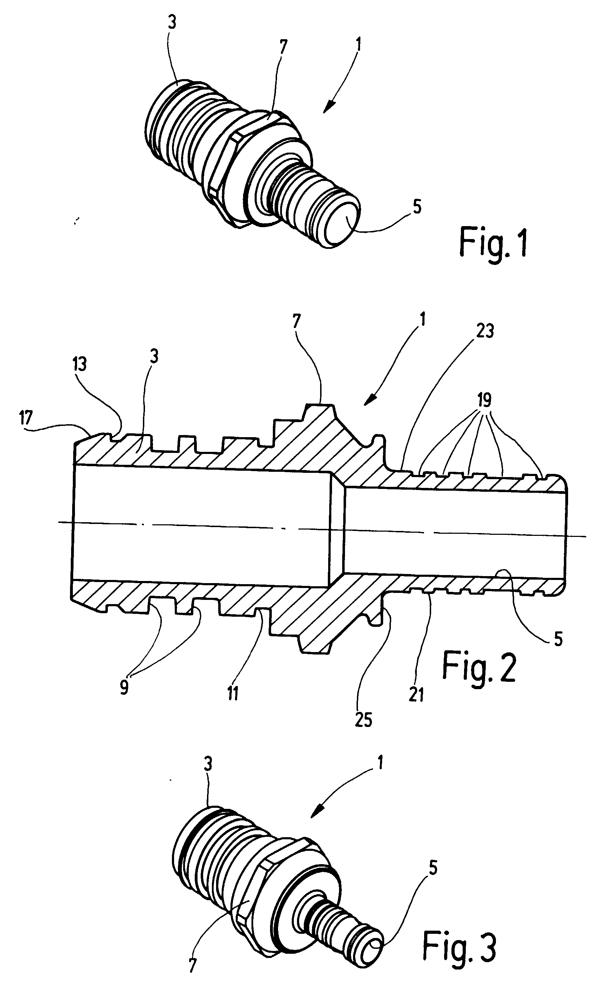

Fig. 1 und 2 zeigen ein Verbindungselement in Form eines Preßadapters 1, der einen Steckerteil 3 als eingangsseitige Anschlußeinrichtung und als abgangsseitige Anschlußeinrichtung eine Tülle 5 aufweist, die als Preßverbinderelement gestaltet ist. Im Übergangsbereich zwischen Steckerteil 3 und Tülle 5, im Bereich des größten Außendurchmessers des Adapters 1, weist dieser als Werkzeuganlagefläche einen Außensechskant 7 auf. Vorzugsweise ist der Preßadapter 1 aus einem Sechskant-Stabmaterial gefertigt, beispielsweise entsprechend der Schlüsselweite 27 mm.

Der Steckerteil 3 definiert einen eingangsseitigen Leitungsquerschnitt, der dem größten in einer betreffenden Heizungs- oder Sanitäranlage erforderlichen Querschnitt angepaßt ist. Die abgangsseitige Tülle 5 definiert entsprechend der Adapterfunktion einen den jeweiligen Erfordernissen angepaßten Leitungsquerschnitt, der beim Beispiel von Fig. 1 und 2 etwas kleiner als der Leitungsquerschnitt des Steckerteiles ist. Wie Fig. 3 deutlich zeigt, bildet der Preßadapter 1 von Fig. 3 einen demgegenüber noch kleineren Leitungsquerschnitt. Bei dem dargestellten Größenverhältnis zwischen Fig. 1 und 2 und Fig. 3 kann die Tüllengröße in Fig. 3 beispielsweise 14 gegenüber einer Tüllengröße von 20 bei Fig. 1 und 2 betragen.

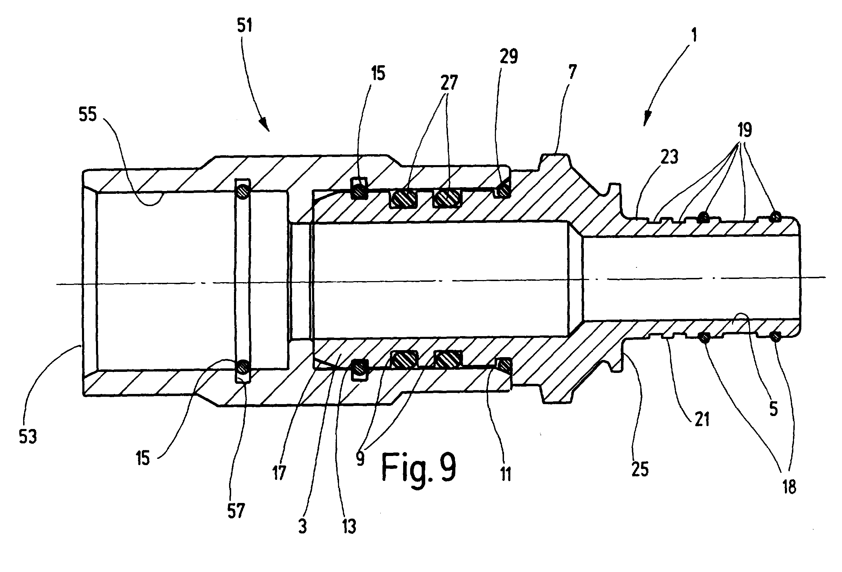

Der Steckerteil 3 der Preßadapter 1 von Fig. 1 bis 3 ist jeweils ohne die zugehörigen, zur Abdichtung der Steckverbindung dienenden Dichtungsringe dargestellt. Es handelt sich hierbei um zwei gleich ausgebildete O-Ringe 27 (Fig. 9), von denen jeder in je einer Ringnut 9 sitzt, sowie um einen dritten, einen demgegenüber kleineren Querschnitt aufweisenden O-Ring 29, der in einer dritten Ringnut 11 aufgenommen ist. Diese letztgenannte, dritte Ringnut 11 befindet am inneren Endbereich des Steckerteiles 3, während die übrigen beiden Ringnuten 9 im Abstand hierzu und im gegenseitigen Abstand voneinander in etwa im mittleren Bereich des Steckerteiles 3 gelegen sind. Etwa mittig zwischen dem vorderen, freien Ende des Steckerteils 3 und der ersten der beiden Ringnuten 9 befindet sich eine weitere Ringnut 13, die als Sitz für einen unter seiner Federwirkung einfallenden Sicherungsring 15 (siehe Fig. 9) dient, der für eine unlösbare, formschlüssige Sicherung der mittels des Steckerteils 3 herzustellenden Steckverbindung dient, worauf nachstehend näher eingegangen wird. Zwischen der Ringnut 13 und dem vorderen Ende bildet der Umfang des Steckerteiles eine Schrägfläche 17, die der geschlitzte Sicherungsring 15 beim Zusammenstecken der Steckverbindung unter Aufweitung überläuft, um sodann in die Ringnut 13 einzufallen.

Die Tülle 5 ist, wie bereits erwähnt, als Preßverbinderelement gestaltet, das zur Herstellung einer Quetschverbindung mit einer auf die Tülle 5 aufgeschobenen schmiegsamen Leitung, beispielsweise einem Kunststoffschlauch, der eine Metallbeschichtung aufweisen kann, dient, In der bei Preßverbinderelementen an sich bekannten Art weist die Tülle 5 in gegenseitigen Abständen voneinander angeordnete, umfängliche Ringnuten 19 auf, und der zwischen den beiden innersten Ringnuten 19 gelegene Umfangsbereich 21 ist mit einer Rändelung versehen. In der ersten und der dritten Ringnut 19, gezählt vom freien Ende der Tülle 5 her, sitzt je ein O-Ring 18, siehe Fig. 9. Diese Ausgestaltung ermöglicht es, die betreffende, auf die Tülle 5 aufgesteckte schmiegsame Leitung, auf welche in an sich bekannter Weise eine metallische Preßhülse aufgeschoben ist, sicher und fluiddicht auf der Tülle 5 zu verpressen, wobei die Rändelung des Umfangsbereiches 21 eine Verdrehsicherung der Quetschverbindung bildet. In dem sich an die innerste Ringnut 19 anschließenden innersten Umfangsbereich 23 der Tülle 5 bildet diese zusammen mit einer radialen Ringfläche 25 einen Sitz für eine nicht dargestellte Flachdichtung.

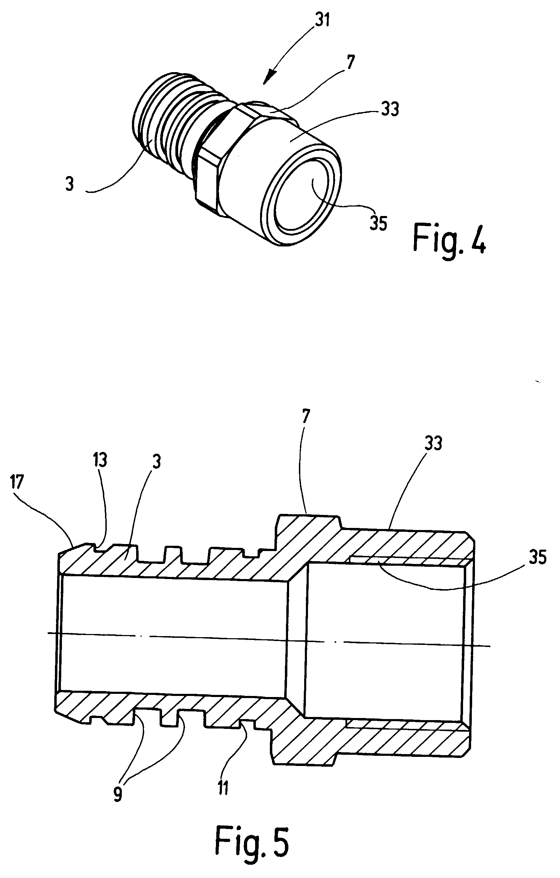

Fig. 4 und 5 zeigen ein als Adapter dienendes Verbindungselement in Form eines Gewindeadapters 31. Der eingangsseitige Steckerteil 3 entspricht in Form und Abmessungen dem Steckerteil 3 des Preßadapters 1 der vorausgehenden Fig. 1 bis 3. Die sich an den Außensechskant 7 anschließende Abgangsseite bildet einen Muffenteil 33 mit Innengewinde 35. Bei dem in der Zeichnung dargestellten Größenverhältnis mit einer angenommenen Schlüsselweite des Außensechskants 7 von 27 mm entspricht das Innengewinde 35 einem Halbzoll-Rohrgewinde.

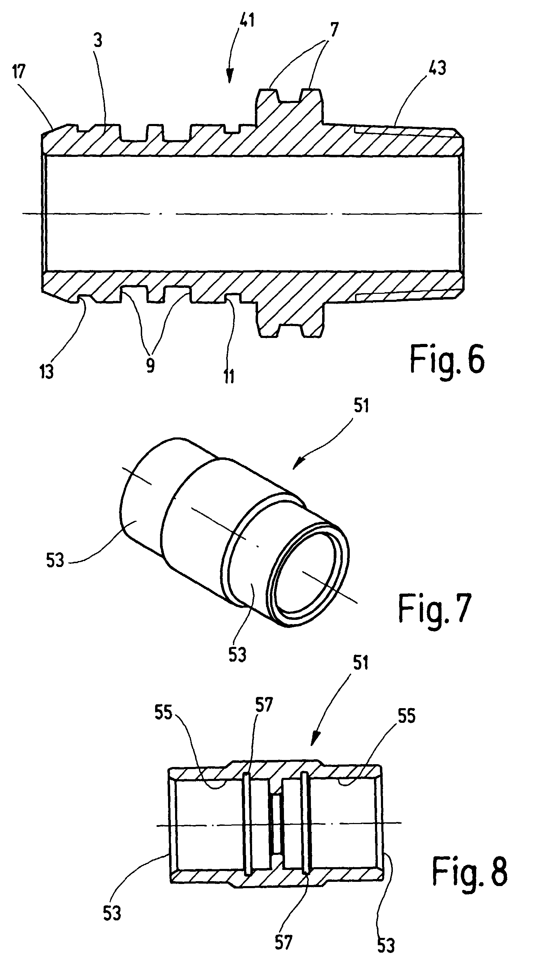

Fig. 6 zeigt einen Gewindeadapter 41 mit wiederum gleichem Steckerteil 3 wie bei den vorausgehend beschriebenen Adaptern 1 und 31, wobei abgangsseitig jedoch ein Gewindestutzen mit Außengewinde 43 vorgesehen ist. Bei dem dargestellten Größenverhältnis und einer angenommenen Schlüsselweite des Außensechskant 7 von 27 mm handelt es sich bei dem Außengewinde 43 um ein Halbzoll-Rohrgewinde.

Fig. 7 und 8 zeigen ein Steckeraufnahmen aufweisendes Verbindungselement in Form eines Kupplungsstückes 51. Dieses bildet eine gerade Muffe, die beidseits mit je einer Steckeraufnahme 53 versehen ist, die die Herstellung der Steckverbindung mit einem beliebigen, den jeweils gleichen Steckerteil 3 aufweisenden Adapter ermöglicht. Da sämtliche der zur Verwendung kommenden Adapter einen jeweils gleichen Steckerteil aufweisen, braucht für eine betreffende Heizungs- und oder Sanitärgesamtanlage jeweils nur ein einziger Typ des Kupplungsstückes 51 bereitgestellt zu werden.

Jede Steckeraufnahme 53 bildet einen Hohlzylinder mit einer glatten Innenfläche 55, an der bei eingeführtem Steckerteil 3 die in den Ringnuten 9 und 11 sitzenden O-Ringe 27 bzw. 29 dichtend anliegen, siehe Fig. 9. Im inneren Bereich jeder Steckeraufnahme 53 ist in die Innenfläche 55 eine Ringnut 57 eingearbeitet, die den Sicherungsring 15 aufnimmt, bei dem es sich um einen geschlitzten Stahlring handelt. Wie Fig. 9 zeigt, ist der Sicherungsring 15 bei eingestecktem Steckerteil 3 nach Überlaufen der Schrägfläche 17 in die Ringnut 13 am Steckerteil eingefallen, um die gebildete Steckverbindung formschlüssig und unlösbar zu sichern.

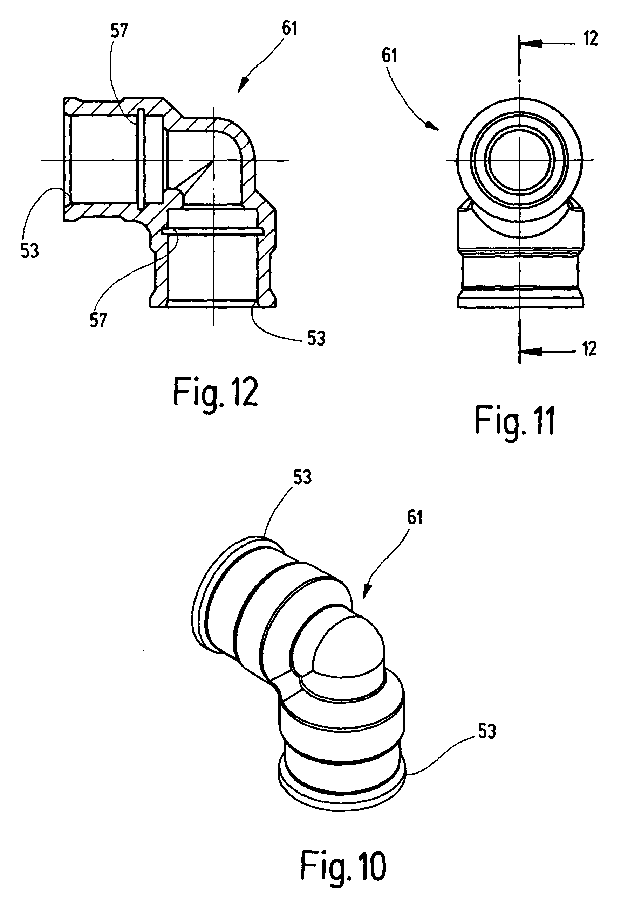

Fig. 10 bis 12 zeigen das mit Steckeraufnahmen versehene Verbindungselement in Form eines Winkelstückes 61 mit beidseits vorgesehenen Steckeraufnahmen 53, die ebenfalls je zur Bildung einer fluiddichten Steckverbindung mit einem Steckerteil 3 vorgesehen und somit jeweils gleich ausgebildet sind. Auch bei der Darstellung des Winkelstückes 61 sind die in den Ringnuten 57 sitzenden Sicherungsringe 15 nicht dargestellt.

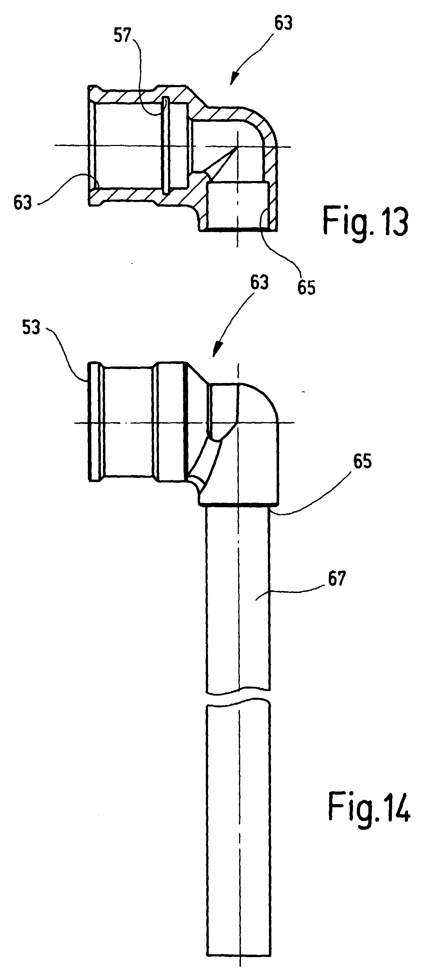

Fig. 13 und 14 zeigen ein Winkelstück 63, das sich vom Winkelstück 61 gemäß Fig. 10 bis 12 lediglich dadurch unterscheidet, daß lediglich eine Steckeraufnahme 53 vorhanden ist, die andere Anschlußseite jedoch als Löt anschluß 65 ausgebildet ist. Fig. 14 zeigt das Winkelstück mit am Lötanschluß 65 eingelötetem Kupferrohrstück 67.

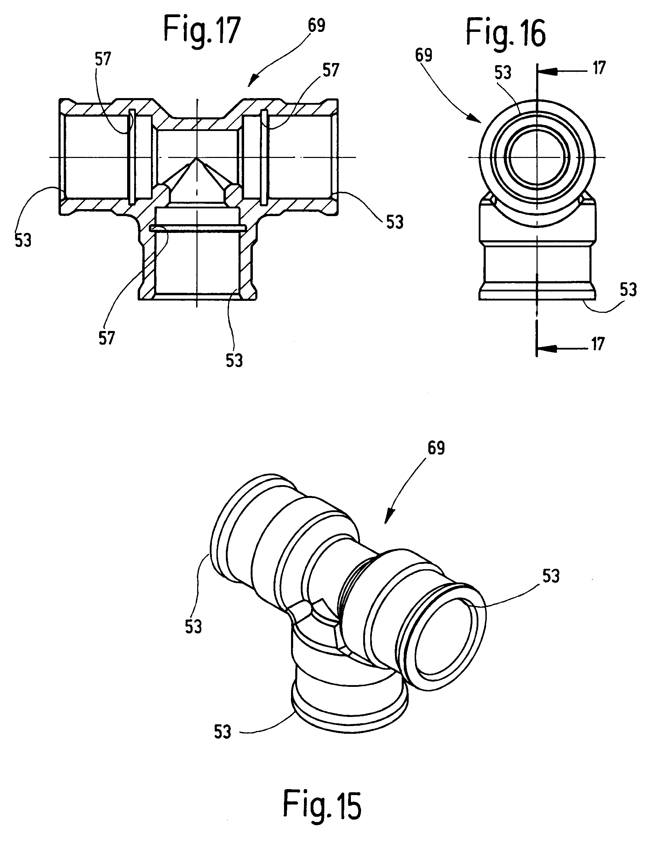

Fig. 15 bis 17 zeigen das mit Steckeraufnahmen 53 versehene Verbindungselement in Form eines T-Stückes 69 mit drei Steckeraufnahmen 53, wobei in Fig. 17 in den Ringnuten 57 wiederum keine Sicherungsringe 15 eingezeichnet sind.

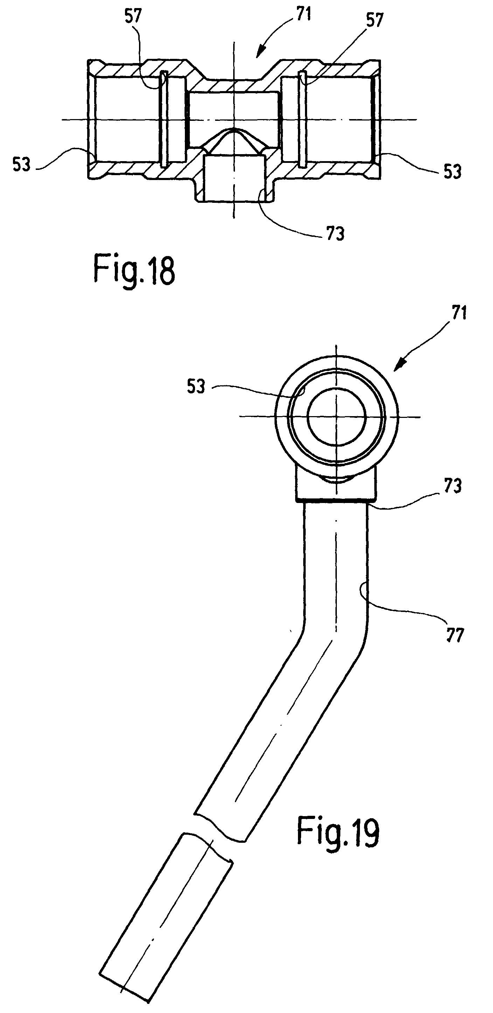

Fig. 18 und 19 zeigen ein Winkelstück 71, das sich vom Winkelstück gemäß Fig. 15 bis 17 lediglich dadurch unterscheidet, daß lediglich zwei Steckeraufnahmen 53 vorgesehen sind, die dritte Anschlußseite jedoch als Lötanschluß 73 ausgebildet ist, an dem bei der Darstellung von Fig. 19 ein Kupferrohrstück 77 eingelötet ist. Wie aus Fig. 19 zu ersehen ist, ist das Kupferrohrstück 77 in einem geringen Abstand vom Lötanschluß 73 unter Bildung eines stumpfen Winkels in der Größenordnung von beispielsweise 150° abgewinkelt.

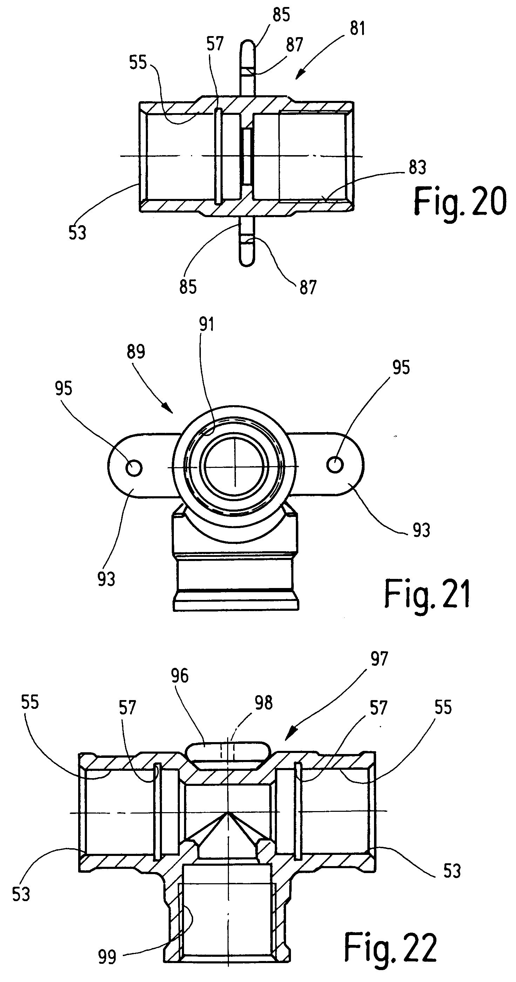

Fig. 20 zeigt eine als Ganzes mit 81 bezeichnete abgewandelte Ausführungsform des Kupplungsstückes von Fig. 7. Im Unterschied hierzu ist nur eine Steckeraufnahme 53 vorhanden. Als zweite Anschlußeinrichtung ist ein Innengewinde 83 vorgesehen, bei dem es sich beispielsweise um ein Halbzoll-Rohrgewinde handeln kann. Außerdem weist das Kupplungsstück 81 im mittleren Bereich seitliche Befestigungsflügel 85 auf, die mit Bohrungen 87 versehen sind, die die Fixierung des Kupplungsstückes 81 ermöglichen.

Fig. 21 zeigt in ähnlicher Weise ein Winkelstück 89, das als einseitige Anschlußeinrichtung ein Innengewinde 91 aufweist. Wie bei Fig. 20 sind seitliche Befestigungsflügel 93 mit Bohrungen 95 vorgesehen.

Fig. 22 schließlich zeigt in ähnlicher Weise ein T-Stück 97 mit zwei zueinander koaxialen Steckeraufnahmen 53 und einem als dritte Anschlußeinrichtung vorgesehenen Innengewinde 99. Im zentralen Bereich sind auch hierbei wiederum seitliche Befestigungsflügel 96 vorgesehen, die sich auf der zum Innengewinde 99 entgegengesetzten Seite senkrecht zur Achse der Steckeraufnahmen 53 erstrecken und Bohrungen 98 für die Befestigung an einer betreffenden Trägerstruktur aufweisen.

Wie oben ausgeführt, wird dadurch, daß die die Steckerteile 3 aufweisenden Verbindungselemente als Adapter zur Leitungsgrößenanpassung ausgebildet sind und daß demzufolge sämtliche Steckerteile 3 form- und abmessungsgleich ausgebildet sein können, erreicht, daß die mit den Steckerteilen 3 der Adapter zusammenwirkenden Kupplungsstücke, Winkelstücke oder T-Stücke jeweils form- und größengleich sein können, ggf. lediglich mit dem Unterschied, daß nach Bedarf Winkelstücke und/oder T-Stücke mit Lötanschluß und/oder, falls dies zweckmäßig sein sollte, mit Aufhängeösen benutzt werden. Werden die Verbindungselemente aus einem sowohl für den Heizungs- als auch den Sanitärbereich geeigneten Werkstoff gefertigt, beispielsweise aus einer Rotgußlegierung (beispielsweise G-CuSn₅ZnPb) so läßt sich das System gleichermaßen für den Bau einer Heizungsanlage als auch Sanitäranlage benutzen. Somit stellt das erfindungsgemäße System eine Art Baukastensystem zur Verfügung, bei dem eine Mindestanzahl von Komponenten aufgrund der durch die Adapterelemente zur Verfügung gestellten Anpassungsmöglichkeiten für den Bau sowohl von Heizungs- als auch Sanitäranlagen ausreicht, d. h. bereitgehalten und zur Baustelle verbracht werden muß, weil der gleiche Typ von Kupplungsstücken, Winkelstücken und T-Stücken für beide Anwendungsfälle (Heizungs-/Sanitäranlagenbau) Anwendung findet, wobei für die Heizungsanlage vorzugsweise Adapterelemente in Form von Preßadaptern und für Sanitärzwecke Gewindeadapter mit Rohrgewindeanschluß Verwendung finden.

## Patentansprüche

1. System zur Verbindung von Leitungs- und/oder Armaturenteilen bei Heizungs- oder Sanitäranlagen mittels eine fluiddichte Steckverbindung ermöglichenden Verbindungselementen, von denen die einen mit einem Steckerteil (3) und die anderen mit zumindest einer hierzu komplementären Steckeraufnahme (53) versehen sind, dadurch gekennzeichnet, daß die den Steckerteil (3) aufweisenden Verbindungselemente als eine Verbindung zwischen Leitungsabschnitten unterschiedlicher Querschnittsgrößen ermöglichende Adapter (1; 31; 41) ausgebildet sind, bei denen der Steckerteil (3) an der Eingangsseite des Adapters einen Durchgang bildet, dessen Querschnitt an den größten in der betreffenden Anlage vorkommenden Leitungsquerschnitt angepaßt ist, und die Abgangsseite des Adapters eine an eine etwa gleiche oder kleinere Querschnittsgröße angepaßte Anschlußeinrichtung bildet.

2. System nach Anspruch 1, dadurch gekennzeichnet, daß das den Steckerteil (3) aufweisende Verbindungselement als Preßadapter (1) mit als abgangsseitige Anschlußeinrichtung dienendem Preßverbinderelement (5) ausgebildet ist.

3. System nach Anspruch 1, dadurch gekennzeichnet, daß das den Steckerteil (3) aufweisende Verbindungselement als Gewindeadapter (31; 41) mit als abgangsseitige Anschlußeinrichtung vorgesehenem Außengewinde (43) oder Innengewinde (35) ausgebildet ist.

4. System nach einem der Ansprüche 1 bis 3, dadurch gekennzeichnet, daß die Verbindungselemente aus einem sowohl für Heizungs- als auch für Sanitäranlagen geeigneten Werkstoff, vorzugsweise aus einer Rotguß-Legierung, gefertigt sind.

5. System nach einem der Ansprüche 1 bis 4, dadurch gekennzeichnet, daß die Steckverbindung für eine formschlüssige, unlösbare gegenseitige Verrastung der Verbindungselemente einen federnden Sicherungsring (15) beinhaltet, der beim Zusammenstecken von Steckerteil (3) und Steckeraufnahme (53) federelastisch in an dieser und an jenem ausgebildete, miteinander fluchtende Ringnuten (13 bzw. 57) federelastisch einfällt.

6. System nach Anspruch 5, dadurch gekennzeichnet, daß die den Sitz des Sicherungsringes bildende Ringnut (57) im inneren Endbereich der Steckeraufnahme (53) ausgebildet ist und daß der vordere Endbereich des Steckerteiles (3) eine endseitige, den Sicherungsring (15) beim Einstecken aufweitende Schrägfläche (17) aufweist, der die das Einschnappen des Sicherungsringes (15) ermöglichende Ringnut (13) nachgeordnet ist.

7. System nach Anspruch 6, dadurch gekennzeichnet, daß die Außenseite des Steckerteiles (3) hinter der den Sicherungsring (15) aufnehmenden Ringnut (13) drei im Abstand voneinander angeordnete, umfängliche Ringnuten (9, 11) zur Aufnahme von die fluiddichte Abdichtung bildenden O-Ringen (27, 29) aufweist.

8. System nach einem der Ansprüche 2 bis 7, dadurch gekennzeichnet, daß das Preßverbinderelement des Adapters (1) eine Tülle (5) mit einer durch eingearbeitete Ringnuten (19) unterbrochenen äußeren Umfangsfläche und mit einem zwischen benachbarten Ringnuten (19) befindlichen, mit einer Rändelung versehenen Umfangsbereich (21) bildet, mit dem eine schmiegsame Leitung, vorzugsweise in Form eines Kunststoffrohres oder Metallverbundrohres, mittels einer aufgeschobenen, metallischen Preßhülse verpreßbar ist.

9. System nach Anspruch 8, dadurch gekennzeichnet, daß der die Rändelung aufweisende Umfangsbereich (21) durch eine an der Tülle (5) am weitesten innen vorgesehene Ringnut (19) von einem am inneren Ende der Tülle (5) vorgesehenen Sitz (23, 25) für eine Flachdichtung getrennt ist, der durch eine innere, in einer Radialebene der Tülle liegende Ringfläche (25) begrenzt ist.

10. System nach Anspruch 9, dadurch gekennzeichnet, daß, gezählt vom freien Ende der Tülle (5) her, zumindest die erste und die dritte Ringnut (19) zur Aufnahme eines als Dichtelement dienenden O-Ringes (18) vorgesehen sind.

11. System nach einem der Ansprüche 3 bis 8, dadurch gekennzeichnet, daß zumindest die als Gewindeadapter (31; 41) ausgebildeten, den Steckerteil (3) aufweisenden Verbindungselemente unrunde Werkzeuganlageflächen, vorzugsweise einen Außensechskant (7), aufweisen.

12. System nach einem der Ansprüche 1 bis 9, dadurch gekennzeichnet, daß als mit mindestens einer Steckeraufnahme (53) versehene Verbindungselemente zumindest Kupplungsstücke (51; 81), Winkelstücke (61; 63; 89) und T-Stücke (69; 71; 97) vorgesehen sind.

13. System nach Anspruch 12, dadurch gekennzeichnet, daß diese Verbindungselemente zumindest eine Anschlußeinrichtung in Form eines Innengewindes (83; 91; 99) oder Außengewindes aufweisen.

14. System nach Anspruch 11 oder 12, dadurch gekennzeichnet, daß Winkelstücke (63) und/oder T-Stücke (71) mit einem Lötanschluß (65 bzw. 73) vorgesehen sind.

15. System nach Anspruch 14, dadurch gekennzeichnet, daß am betreffenden Lötanschluß (65; 73) ein Kupferrohrstück (67; 77) durch Weichlöten angebracht ist und daß das Rohrstück (67; 77) in einem Abstand vom Lötanschluß (65; 73) abgewinkelt ist.
